(19) Europäisches Patentamt
European Patent Office
Office européen des brevets

(11) Veröffentlichungsnummer: **0 209 857**
**B1**

(12) # EUROPÄISCHE PATENTSCHRIFT

(45) Veröffentlichungstag der Patentschrift: **18.10.89**

(51) Int. Cl.⁴: **C 09 D 3/72**, C 09 D 3/58, C 09 D 5/44, C 08 G 18/54

(21) Anmeldenummer: **86109853.1**

(22) Anmeldetag: **17.07.86**

(54) **Verfahren zur Herstellung von selbstvernetzenden kationischen Lackbindemitteln.**

(30) Priorität: **22.07.85 AT 2157/85**
**18.09.85 AT 2712/85**
**25.09.85 AT 2786/85**
**18.12.85 AT 3650/85**
**27.06.86 AT 1743/86**

(43) Veröffentlichungstag der Anmeldung:
**28.01.87 Patentblatt 87/5**

(45) Bekanntmachung des Hinweises auf die Patenterteilung:
**18.10.89 Patentblatt 89/42**

(84) Benannte Vertragsstaaten:
**BE CH DE FR GB IT LI NL SE**

(56) Entgegenhaltungen:
**DE-B- 2 759 428**
**FR-A- 2 324 697**
**FR-A- 2 333 838**
**FR-A- 2 384 011**
**US-A- 3 963 663**

(73) Patentinhaber: **Vianova Kunstharz Aktiengesellschaft, A-8402 Werndorf (AT)**

(72) Erfinder: **Paar, Willibald, Dr., Richard Wagnergasse 46, A-8010 Graz (AT)**
Erfinder: **Hönel, Michael, Dr., Humboldtstrasse 51, A-8010 Graz (AT)**
Erfinder: **Gmoser, Johann, Radegunderstrasse 30, A-8045 Graz (AT)**

**EP 0 209 857 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von selbstvernetzenden, nach Protonierung wasserverdünnbaren kationischen Lackbindemitteln auf der Basis von Harnstoffgruppen aufweisenden Reaktionsprodukten aus modifizierten Phenolen und Epoxidharzen.

Aus der DE-A 2 320 301 sind Lackbindemittel bekannt, welche durch Umsetzung von MANNICH-Basen (aus kondensierten Phenolen, sekundären Alkanolaminen und Formaldehyd) und einem Epoxidharz erhalten werden. Ähnliche Bindemittel sind auch in der DE-OS 2 419 179 beschrieben.

Wie in der DE-A 2 711 385 ausgeführt wird, haben diese Systeme den Nachteil, daß beim Einbrennen Amine abgespalten werden. Es wird daher vorgeschlagen, ein MANNICH-Kondensationsprodukt aus einem Phenol und/oder Alkylphenol, einem primären Amin und Formaldehyd einzusetzen.

Ein weiterer Vorschlag, die Produkte gemäß DE-A 2 320 301 usw. zu verbessern, wird in der DE-A 2 711 425 gemacht, wonach diesen Bindemitteln wasserunlösliche urethangruppenhaltige Harze, insbesondere von modifizierten Polyamidaminharzen, zugemischt werden.

Zur Vermeidung der Aminabspaltung wird in der DE-B 2 541 801 vorgeschlagen, die MANNICH-Base mit einem Epoxidharz auf der Basis von mehrwertigen Alkoholen dessen Hydroxylgruppen mit halbblockierten Diisocyanaten umgesetzt sind, und gegebenenfalls einem urethangruppenfreien Epoxidharz zu reagieren. Ein ähnliches Verfahren ist auch in der DE-A 2 554 080 beschrieben.

In allen diesen Fällen dient die Umsetzung mit den Isocyanaten der Unterdrückung der Aminabspaltung beim Einbrennen.

Die bisher bekannten Produkte auf dieser Basis können jedoch die Ansprüche der Automobilindustrie bezüglich der Korrosionsfestigkeit bei Vernetzungstemperaturen von 150 bis 170°C bzw. der Haftfestigkeit der eingebrannten Filme, insbesondere die Haftung der Folgeschichten, nicht befriedigen.

Es wurde nun gefunden, daß diese Forderungen erfüllt werden können, wenn durch geeignete Auswahl der Ausgangsmaterialien und bestimmte Verfahrensschritte ein gezielter Einbau von modifizierten Harnstoffgruppen erfolgt.

Die Erfindung betrifft demgemäß ein Verfahren zur Herstellung von selbstvernetzenden, nach Protonierung wasserverdünnbaren kationischen Lackbindemitteln auf der Basis von Reaktionsprodukten aus substituierten Harnstoff-Phenol-Formaldehyd-Kondensaten und Epoxidharzen, welches dadurch gekennzeichnet ist, daß man

(A) ein durchschnittlich mindestens eine NH-Gruppe pro Molekül aufweisendes Aminoalkylierungsprodukt aus Phenol und/oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder Alkylendiamin und Formaldehyd oder einer formaldehydabspaltenden Verbindung mit einem halbblockierten Diisocyanat oder

(A1) ein halbblockiertes Diisocyanat mit einem primären Alkylamin und/oder primären Alkanolamin und/oder Alkylendiamin und den entstehenden substituierten Harnstoff mit Formaldehyd oder einer formaldehydabspaltenden Verbindung und Phenol und/oder einem substituierten Phenol, vorzugsweise Monoalkyl- oder Monoaryl- oder Monoaralkylphenol mit einer oder gegebenenfalls zwei phenolischen Hydroxylgruppen umsetzt und in einer weiteren Reaktionsstufe

(B) 50 bis 100% der phenolischen Hydroxylgruppen mit Epoxidverbindungen, vorzugsweise Diepoxidharzen mit einem Epoxidäquivalentgewicht zwischen 50 und 2000, reagiert.

Die Erfindung betrifft weiters die nach diesem Verfahren hergestellten Lackbindemittel und deren Verwendung in wasserverdünnbaren Lacken, insbesondere in kathodisch abscheidbaren Elektrotauchlacken.

Die Herstellung der für das erfindungsgemäße Verfahren geeigneten Aminoalkylierungsprodukte von Phenolen erfolgt nach den üblichen literaturbekannten Methoden [HOUBEN-WEYL, Methoden der organischen Chemie, Band XI/1 (1957)]. Die Kondensation von Harnstoffen mit Phenol und Formaldehyd wird beispielsweise in HOUBEN-WEYL, Band XIV/2 (1963) beschrieben.

In beiden Verfahrensweisen werden als Phenole dabei Phenol oder substituierte Phenole, wie Monoalkylphenole, vorzugsweise solche, deren Alkylrest mindestens 4 C-Atome aufweist eingesetzt. Vertreter dieser Gruppe sind die o- bzw. p-Butylphenole und ihre höheren Homologen. Ebenso können auch Arylphenole, wie Phenylphenol oder Aralkylphenole, wie Bisphenol A eingesetzt werden.

Als primäre Amine können mono-prim. Amine, wie Butylamin oder dessen Isomeren und Homologen, prim. Alkanolamine, wie Monoethanolamin oder dessen Homologen, primär-tertiäre Diamine, wie Dialkylaminoalkylamine, z.B. Dimethylaminoethylamin oder Diethylaminopropylamin, oder diprimäre Amine, wie Ethylendiamin und seine Homologen eingesetzt werden. Neben den Alkylendiaminen können auch Diamine eingesetzt werden, welche eine durch Ethergruppen oder Aminogruppen unterbrochene Kohlenstoffkette aufweisen. Beispiele für brauchbare Verbindungen dieser Art sind das 4,7-Dioxydecan-1,10-diamin, das 7-Methyl-4,10-dioxa-tridecan-1,13-diamin oder Polyoxyalkylendiamine der Formel

$$H_2N\text{-}(CH_2\text{-}\underset{|}{\overset{}{C}}H\text{-}O)_n\text{ - }CH\text{ - }CH_2\text{ - }NH_2$$

(mit R an den beiden CH-Gruppen: $H_2N-(CH_2-CH(R)-O)_n-CH(R)-CH_2-NH_2$)

wobei R = H oder $CH_3$ und n = 1 - 30 sein kann.

Gegebenenfalls können auch höherfunktionelle Amine vom Typ des Diethylen- oder Dipropylentriamins bzw. des Polyoxypropylentriamins oder N,N'-Bis-(3-amino-propyl)-ethylendiamins eingesetzt werden. Bei Verwendung höherfunktioneller Amine ist naturgemäß im weiteren Verlauf der Umsetzung die Auswahl der Komponenten und der Reaktionsbedingungen besonders sorgfältig zu wählen, um eine Gelierung des Ansatzes zu vermeiden. Insbesondere

ist bei Verwendung von höherfunktionellen Aminen die Menge des halbblockierten Diisocyanats auf die Zahl der NH-Funktionen abzustimmen.

Es war dabei überraschend, daß auch bei Verwendung eines difunktionellen Amins bei der Harnstoffbildung bzw. Aminoalkylierung weitgehend einheitliche Umsetzungsprodukte erhalten werden, mit welchen die weiteren Umsetzungen in einwandfreier Weise durchgeführt werden können.

Als Formaldehyd wird bevorzugt Paraformaldehyd in der handelsüblichen Form mit einem Formaldehydgehalt von 80% und mehr eingesetzt.

In der bevorzugten Ausführungsform der Verfahrensweise (A) erfolgt die Aminoalkylierung in der Weise, daß man die Komponenten in Gegenwart eines mit Wasser ein Azeotrop bildenden Lösemittels, wie Toluol oder einem entsprechenden Benzinkohlenwasserstoff, unter Berücksichtigung einer eventuellen Exothermie auf die für die azeotrope Entfernung des Reaktionswassers notwendige Temperatur erwärmt.

Nach Abtrennung der berechneten Wassermenge wird das Kreislaufmittel vorzugsweise unter Vakuum entfernt und das Reaktionsprodukt in einem aprotischen Lösemittel gelöst. Gegebenenfalls können die weiteren Reaktionen auch in Anwesenheit des Kreislaufmittels erfolgen.

Das so erhaltene Reaktionsprodukt, welches pro Molekül durchschnittlich mindestens eine sekundäre Aminogruppe aufweist, wird in der nächsten Stufe bei 30 bis 50°C mit einem halbblockierten Diisocyanat umgesetzt, wobei für jede NH-Gruppe 1 Mol der Isocyanatverbindung zum Einsatz kommt. Durch die Umsetzung der NH-Gruppen mit den halbblockierten Diisocyanaten werden die erwünschten Harnstoffgruppierungen gebildet. Gegebenenfalls vorhandene Hydroxylgruppen werden dabei aufgrund der bevorzugten Reaktion zwischen NH- und NCO-Gruppen nur in vernachlässigbarem Umfang in die Reaktion einbezogen.

Die halbblockierten Diisocyanate werden in bekannter Weise hergestellt, wobei vorzugsweise solche Diisocyanate, deren NCO-Gruppen verschiedene Reaktivität aufweisen, wie Toluylendiisocyanat oder Isophorondiisocyanat, verwendet werden.

Als Blockierungsmittel dienen bevorzugt aliphatische Monoalkohole, welche — gegebenenfalls in Gegenwart der üblichen Katalysatoren — unter den Einbrennbedingungen abgespalten werden. Andere Blockierungsmittel sind beispielsweise Phenole, Oxime, Amine, ungesättigte Alkohole, Caprolactam, etc.

Bei der Verfahrensweise (A1) wird in erster Stufe aus dem halbblockierten Diisocyanat und dem primären Amin ein substituierter Harnstoff gebildet. Dazu wird der Lösung des Amins bzw. der Mischung verschiedener Amine in einem isocyanatinerten Lösemittel, wie Toluol oder einem Glykoldiether das halbblockierte Diisocyanat unter Kühlung bei 30 bis 60°C zugegeben und die Reaktion bis zu einem Isocyanatwert von ca. 0 weitergeführt. Anschließend wird bei 70°C der Formaldehyd, vorzugsweise in Form des Paraformaldehyds, zugegeben und die Temperatur etwa 1 Stunde gehalten. Nach Zugabe des Phenols wird bei steigender Temperatur zwischen 80 und 140°C das Reaktionswasser mit Hilfe eines Schleppmittels, vorzugsweise Toluol durch azeotrope Destillation entfernt. Gegebenenfalls wird das Schleppmittel anschließend unter Vakuum entfernt und der Ansatz in einem hydrophilen Lösemittel gelöst.

In der letzten Stufe werden die nach dem Verfahren (A) bzw. (A1) hergestellten Reaktionsprodukte mit Epoxidverbindungen unter Bildung von Phenolethern umgesetzt. Als Epoxidverbindungen werden dabei vorzugsweise Diepoxidharze auf Basis von Bisphenol A oder Polypropylenglykol verwendet. Anteilsweise können auch Monoepoxidverbindungen wie Glycidylester von Monocarbonsäuren, insbesondere solche der sogenannten KOCH-Säuren sowie 2-Ethylhexylglycidylether verwendet werden. Die Umsetzung erfolgt bei 80 bis 130°C bis zu einem Epoxidwert von praktisch 0.

Es hat sich gezeigt, daß die Endprodukte praktisch keine Unterschiede aufweisen, gleichgültig ob das mit dem Epoxidharz zur Anwendung kommende Vorprodukt nach der Methode (A) oder (A1) hergestellt wurde. Es muß daher angenommen werden, daß in beiden Fällen Produkte entstehen, die den gleichen Grundaufbau im Sinne der Formel

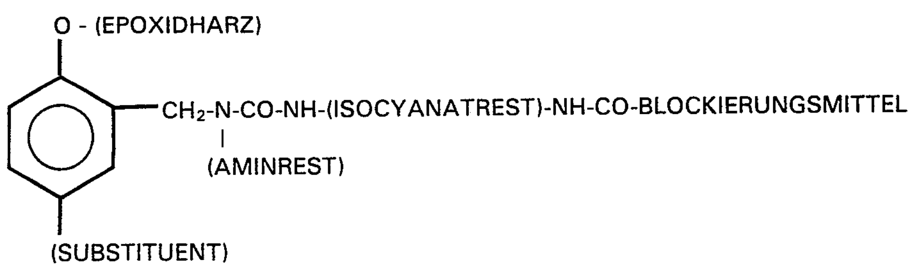

aufweisen.

In einer besonderen Ausführungsform der Erfindung werden in dieser Stufe des Verfahrens teilweise mit Mono- oder Polycarboxylverbindungen veresterte Diepoxidharze eingesetzt.

Durch eine entsprechende Auswahl dieses Modifikators ist eine Beeinflussung der rheologischen und applikatorischen Eigenschaften des Überzugsmittels bzw. der daraus gebildeten Lackfilme möglich.

Als Monocarboxylverbindungen können die natürlichen und synthetischen Fettsäuren oder Halbester von Dicarbonsäuren mit aliphatischen Monoalkoholen oder Hydroxyalkyloxazolidinen eingesetzt werden.

Als Polycarboxylverbindungen werden bevorzugt längerkettige Dicarbonsäuren, wie dimere Fettsäuren oder Carboxylgruppen tragende weitgehend lineare Polyester verwendet. Eine weitere Gruppe von Polycarboxylverbindungen sind Addukte von Maleinsäureanhydrid an längerkettige Polyenverbindungen, z.B. flüssige Butadienpolymere, wobei die Anhydridgruppen durch Umsetzung mit Monoalkoholen geöffnet werden.

Die Umsetzung der Carboxylverbindung mit dem Diepoxidharz kann vor der Umsetzung mit dem Zwischenprodukt erfolgen, wobei die Reaktion bei 100 bis 120°C, gegebenenfalls in Gegenwart von basischen Katalysatoren, bis zu einer Säurezahl von weniger als 3 mg KOH/g geführt wird.

Die Umsetzung mit der Carboxylverbindung kann aber auch gleichzeitig mit der letzten Verfahrensstufe erfolgen. Das nach Verfahren (A) bzw. (A1) hergestellte Vorprodukt, die Carboxylverbindung und das Diepoxidharz werden dabei bei 90 bis 120°C, bis zu einem Epoxidwert von praktisch 0 reagiert. Für den Fall, daß der Ansatz neben Diepoxidharzen auch Monoepoxidverbindungen aufweist, wird vorzugsweise die erstgenannte Verfahrensvariante benutzt. Gegebenenfalls können die Monoepoxidverbindungen auch bei der Reaktion zwischen Diepoxidverbindung und der Carboxylverbindung anwesend sein. Vorzugsweise werden sie erst nach der Carboxylreaktion zugegeben und reagiert.

Bei der Formulierung der Ansätze ist darauf zu achten, daß die Endprodukte die erforderliche Basizität aufweisen, um eine ausreichende Stabilität der wäßrigen Lösung des Bindemittels zu gewährleisten. Die Einführung dieser vorzugsweise auf tertiären Aminogruppen beruhenden Basizität, entsprechend einer Aminzahl von mindestens 30 mg KOH/g, wird vorzugsweise durch Verwendung von primär-tertiären Diaminen bei der Aminoalkylierung erzielt, kann aber auch durch Einsatz von entsprechenden Aminen als Blockierungsmittel für die Halbblockierung der Diisocyanate erfolgen.

Zur Erzielung der Wasserverdünnbarkeit werden die basischen Gruppen des Bindemittels mit Säuren, vorzugsweise mit Ameisensäure, Essigsäure oder Mischsäure, partiell oder vollständig neutralisiert. Für eine praxisgerechte Verdünnbarkeit genügt dafür üblicherweise eine Neutralisation von 20 bis 60% der basischen Gruppen oder eine Menge von ca. 20 bis 60 Millimol Säure pro 100 g Festharz. Die Bindemittel werden dann mit deisonisiertem Wasser auf die gewünschte Konzentration verdünnt; gegebenenfalls werden sie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170°C während 10 bis 30 Minuten. Sofern die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden.

In einer besonderen Ausführungsform wird den Bindemitteln eine Polyhydroxylverbindung zugemischt. Diese kann sowohl wasserlöslich oder weitgehend wasserunlöslich sein und weist ein Hydroxyläquivalent von höchstens 1000, vorzugsweise 100 bis 400, auf. [Als Hydroxyläquivalent wird die Menge Festsubstanz (in Gramm) bezeichnet, in welcher ein Mol Hydroxylgruppen enthalten ist.]

Durch diese Maßnahme wird sowohl die für die Vernetzung der Produkte wichtige Hydroxylbilanz verbessert, als auch eine weitere Möglichkeit der Beeinflussung des Abscheideverhaltens und der Filmeigenschaften angeboten. Die Mischungen können zwischen 5 und 80 Gew.-%, vorzugsweise 10 bis 50 Gew.-% dieser Zumischkomponente (bezogen auf Festharz) enthalten.

Als wasserlösliche Polyhydroxylkomponenten kommen vorzugsweise protonierte Epoxidharz-Amin-Addukte sowie deren Modifizierungsprodukte zur Verwendung. Produkte dieser Art sind aus der einschlägigen Literatur in breitem Umfang bekannt. Eine Beschränkung dieser Auswahl ist im wesentlichen nur durch das vorgegebene Hydroxyläquivalentgewicht gegeben. Insbesondere bei der Formulierung von Elektrotauchlackbindemitteln wird höhermolekularen, sowohl durch Protonierung wasserverdünnbar gemachten als auch nicht wasserverdünnbaren, mit dem Basisharz verträglichen Materialien, der Vorzug gegeben.

Zu den letzteren zählen neben monomeren Polyolen mit beschränkter Wasserlöslichkeit, wie Trimethylolethan oder -propan oder Pentaerythrit ein entsprechendes Hydroxyläquivalentgewicht aufweisende entfunktionalisierte Phenole, wie Umsetzungsprodukte von Bisphenol A mit Ethylen- oder Propylenoxid, entsprechend entfunktionalisierte Phenolnovolake, weiters Epoxidharzester, Epoxidharz-Amin-Addukte mit einer auch nach Protonierung weitgehenden Unlöslichkeit in Wasser, sowie Hydroxylgruppen tragende Polyurethane, Polyamide oder Copolymere, beispielsweise die handelsüblichen Copolymere aus ungesättigten Alkoholen und Styrol.

Die Zumischung dieser Komponenten erfolgt gegebenenfalls bei mäßig erhöhter Temperatur, wobei insbesondere die wasserunlöslichen Komponenten vorteilhafterweise vor der Protonierung bzw. Verdünnung des Basisharzes eingearbeitet werden.

Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, sofern nichts anders angegeben ist, auf Gewichtseinheiten.

*Beispiel 1*

In einem geeigneten Reaktionsgefäß werden 220 Teile Nonylphenol (1 Mol) mit 130 Teilen Diethylaminopropylamin (1 Mol) und 100 Teilen Toluol auf

75°C erwärmt und dem Ansatz anschließend unter leichtem Kühlen 33 Teile Paraformaldehyd 91% (1 Mol) zugefügt. Die Temperatur wird langsam gesteigert, bis sich eine zügige azeotrope Destillation einstellt. Nach Abtrennen von 21 Teilen Reaktionswasser wird das Toluol im Vakuum abdestilliert und das Produkt in 167 Teilen Diethylenglykoldimethylether gelöst.

Die so erhaltene Lösung wird bei 30 bis 40°C unter Kühlung mit 304 Teilen (1,0 Mol) eines mit 2-Ethylhexanol halbblockierten Toluylendiisocyanats versetzt und die Temperatur von 40°C 1,5 Stunden bis zu einem NCO-Wert von praktisch 0 gehalten.

Anschließend werden 475 Teile eines Epoxidharzes auf Basis von Bisphenol A (Epoxidäquivalentgewicht 475) in 200 Teilen Propylenglykolmonomethylether gelöst und nach Zusatz von 835 Teilen des oben hergestellten Vorproduktes bei 95 bis 100°C bis zu einem Epoxidwert von praktisch 0 reagiert. Das Produkt wird mit 0,5 Teilen/100 g Festharz (berechnet als Metall) eines Zinn-Katalysators, z.B. Dibutylzinndilaurat versetzt und ist nach Zusatz von 50 Millimol Ameisensäure pro 100 g Festharz einwandfrei wasserverdünnbar. Bei 160°C eingebrannte Filme zeigen eine Methylethylketonfestigkeit von mehr als 150 Doppelhüben.

*Beispiel 2*

Wie im Beispiel 1 beschrieben, werden 228 Teile Bisphenol A (1 Mol) mit 260 Teilen Diethylaminopropylamin (2 Mol) und 66 Teilen Paraformaldehyd 91% (2 Mol) in Gegenwart von 131 Teilen Toluol als Azeotropschleppmittel bis zur Abtrennung von 42 Teilen Reaktionswasser umgesetzt. Nach Zusatz von 152 Teilen Diethylenglykoldimethylether und Kühlung auf 30°C werden innerhalb von 45 Minuten 608 Teile (2,0 Mol) eines mit 2-Ethylhexanol halbblockierten Toluylendiisocyanats zugegeben. Nach Erreichen eines NCO-Wertes von praktisch 0 werden 1400 Teile dieser Lösung mit einer Lösung von 190 Teilen eines Epoxidharzes auf Basis von Bisphenol A (Epoxidäquivalentgewicht ca. 190) und 250 Teilen (1 Mol) eines Glycidylesters einer gesättigten, tertiären $C_9$-$C_{11}$-Monocarbonsäure in 389 Teilen Diethylenglykoldimethylether versetzt und bei 95 bis 100°C bis zu einem Epoxidwert von 0 umgesetzt. Das Produkt wird mit 0,6 Teilen/100 g Festharz (berechnet als Metall) eines Zinnkatalysators, z.B. Dibutylzinndilaurat versetzt und ist nach Zusatz von 40 Millimol Ameisensäure pro 100 g Festharz einwandfrei mit Wasser verdünnbar. Elektrisch abgeschiedene Filme, die bei 160°C eingebrannt wurden, zeigen eine Methylethylketonfestigkeit von mehr als 150 Doppelhüben.

*Beispiel 3*

In einem geeigneten Reaktionsgefäß werden 116 Teile (1 Mol) 1,6-Hexamethylendiamin mit 440 Teilen (2 Mol) Nonylphenol, 66 Teilen (2 Mol) Paraformaldehyd 91% und 148 Teilen Toluol auf ca. 90°C erwärmt und durch azeotrope Destillation 42 Teile Reaktionswasser abgetrennt. Anschließend wird das Toluol im Vakuum abdestilliert und durch 396 Teile Diethylenglykoldimethylether zersetzt. Zu dieser Lösung werden bei 40°C langsam 608 Teile (2 Mol) eines mit 2-Ethylhexanol halbblockierten Toluylendiisocyanats zugegeben und bis zu einem NCO-Wert von 0 reagiert (Vorprodukt 1).

In einem zweiten Reaktionsgefäß werden 220 Teile (1 Mol) Nonylphenol mit 260 Teilen (2 Mol) Diethylaminopropylamin und 130 Teilen Toluol auf ca. 60°C erwärmt. Dann werden dem Ansatz unter Kühlen 66 Teile (2 Mol) Paraformaldehyd 91% zugefügt und die Temperatur langsam gesteigert, bis sich eine zügige azeotrope Destillation einstellt. Nach Abtrennen von 42 Teilen Reaktionswasser wird das Toluol im Vakuum abdestilliert und das Reaktionsprodukt in 278 Teilen Diethylenglykoldimethylether gelöst. Die so erhaltene Lösung wird bei max. 40°C unter Kühlung mit 608 Teilen (2 Mol) eines mit 2-Ethylhexanol halbblockierten Toluylendiisocyanats bis zu einem NCO-Wert von 0 reagiert (Vorprodukt 2).

1584 Teile des Vorproduktes 1 werden mit 2780 Teilen des Vorproduktes 2 gemeinsam mit 760 Teilen (4 Äquivalente) eines Diepoxidharzes auf Basis von Bisphenol A (Epoxidäquivalentgewicht ca. 190) und 440 Teilen Methoxypropanol bis zur vollständigen Umsetzung der Epoxidgruppen bei 90°C gehalten.

Das Produkt wird mit 0,6 Teilen/100 g Festharz (berechnet als Metall) Dibutylzinndilaurat (oder einem anderen Zinnkatalysator) versetzt und durch Zugabe von 35 Millimol Ameisensäure pro 100 g Festharz in die wasserverdünnbare Form gebracht.

Elektrisch abgeschiedene Filme, die bei 160°C eingebrannt sind, zeigen eine Methylethylketonfestigkeit von mehr als 150 Doppelhüben.

*Beispiel 4*

80 Teile Festharz der gemäß Beispiel 1 hergestellten, ca. 75%igen Lösung des Reaktionsproduktes werden mit 20 Teilen (Festharz) der PHV 1 * gründlich vermischt und mit 0,8 Teilen (berechnet als Metall) Dibutylzinndilaurat und 50 Millimol Ameisensäure versetzt. Durch Verdünnen mit deionisiertem Wasser wird ein 10%iger Klarlack hergestellt. Die elektrisch abgeschiedenen und bei 160°C eingebrannten Lackfilme zeigen eine Methylethylketonfestigkeit von mehr als 150 Doppelhüben.

* Die Herstellung der Polyhydroxylverbindung erfolgt in der nachstehend beschriebenen Weise:

*PHV 1* (nach Protonierung wasserlöslich; OH-Äquivalentgewicht ca. 300):

500 Teile eines Epoxidharzes auf Basis von Bisphenol A (Epoxidäquivalentgewicht ca. 500) werden in 214 Teilen Propylenglykolmonomethylether gelöst und bei 110°C mit 83 Teilen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Teile eines NH-funktionellen Oxazolidins aus Aminoethylethanolamin, 2-Ethylhexylacrylat und Formaldehyd, sowie 26 Teile Diethylaminopropylamin zugefügt und der Ansatz bei 80°C bis zu einem Epoxidwert von praktisch 0 reagiert. Der Ansatz wird mit 200 Teilen Propylenglykolmonomethylether verdünnt.

*Beispiel 5*

75 Teile Festharz der gemäß Beispiel 2 hergestellten Lösung des Reaktionsproduktes werden mit 25 Teilen (Festharz) der PHV 2 * gründlich vermischt und mit 0,8 Teilen (berechnet als Metall) Dibutylzinndilaurat und 25 Millimol Ameisensäure versetzt. Aus dem 10%igen wäßrigen Klarlack werden Filme auf entfettetes Stahlblech abgeschieden und bei 150°C eingebrannt. Die Filme zeigen eine Methylethylketonfestigkeit von mehr als 150 Doppelhüben.

* Die eingesetzte Polyhydroxylverbindung ist nach Protonierung wasserlöslich und weist ein OH-Äquivalentgewicht von ca. 145 auf. Sie ist ein in bekannter Weise hergestelltes Umsetzungsprodukt aus 1 Mol eines Epoxidharzes auf Basis von Bisphenol A (Epoxidäquivalentgewicht ca. 475) mit 2 Mol Diethanolamin; 70%ig in Methoxypropanol.

*Beispiele 6 - 10*

In den folgenden Beispielen werden teilweise mit Mono- und/oder Polycarboxylverbindungen umgesetzte Epoxidverbindungen eingesetzt.

Die Herstellung der modifizierten Aminoalkylierungsprodukte (VP) erfolgt gemäß den Beispielen 1 und 2 in den in der folgenden Tabelle 1 angegebenen Mengenverhältnissen.

Die Umsetzung der in der Tabelle 2 angegebenen Ausgangsstoffe kann sowohl im Ein- bzw. Zweistufenverfahren erfolgen. Ein über die üblichen Schwankungen hinausgehender Unterschied in den Eigenschaften der Produkte konnte nicht festgestellt werden. Beim Einstufenverfahren werden die Komponenten in 70%iger Lösung im Lösemittel, vorzugsweise in DGDM bei 95 bis 100°C bis zur vollständigen Umsetzung der Epoxidgruppen reagiert. Gegebenenfalls eingesetzte Monoglycidylverbindungen werden in diesem Falle vorzugsweise erst nach der Reaktion der Diepoxidharze mit den Carboxylverbindungen zur Umsetzung gebracht.

Beim Zweistufenverfahren wird das Diepoxidharz in erster Stufe bei 100 bis 120°C in Gegenwart von 0,05 bis 0,2 Gew.-% Triethylamin mit der Carboxylverbindung bis zu einer Säurezahl von weniger als 0,3 mg KOH/g umgesetzt. Nach Zugabe des modifizierten Aminoalkylierungsproduktes (VP) und der gegebenenfalls eingesetzten Monoglycidylverbindung sowie Einstellen eines Festkörpergehalts von 70 bis 75% mit DGDM erfolgt die weitere Reaktion bei 90 bis 100°C bis zu einem Epoxidwert von praktisch 0.

Für die weitere Verarbeitung werden die Produkte auf den in der Tabelle 2 angegebenen Festkörpergehalt eingestellt. Als Lösemittel dienen vor allem Glykolether, vorzugsweise Methoxypropanol.

Die Spalte «Löslichkeit» gibt die Menge Ameisensäure (in Millimol) pro 100 g Festharz an, die notwendig ist, um, nach Verdünnen mit Wasser auf einen Festkörpergehalt von 15%, einen stabilen Klarlack zu ergeben.

*Beispiele 11 - 15*

In diesen Beispielen werden die Vorprodukte nach dem Verfahren (A1) hergestellt. Art und Menge der Ausgangsstoffe sind in der Tabelle 1a zusammengefaßt. Dabei werden in einem geeigneten Reaktionsgefäß das Amin(gemisch) im Lösemittel gelöst und unter Kühlung das halbblockierte Diisocyanat in Portionen zugegeben. Die Temperatur kann dabei von 30°C auf 60°C ansteigen. Die Reaktion wird bei 60°C bis zu einem NCO-Wert von praktisch 0 weitergeführt.

Anschließend wird bei 70°C die vorgesehene Menge Formaldehyd in Form von Paraformaldehyd ($CH_2O$-Gehalt 90 bis 100%) zugegeben und die Temperatur 1 Stunde gehalten. Nach Zugabe des Phenols wird eine azeotrope Destillation z.B. mit Toluol eingerichtet und bei 80 bis 140°C das Reaktionswasser abgetrennt. Nachdem pro Mol $CH_2O$ ca. je 1 Mol Wasser abgetrennt wurde wird gegebenenfalls das Schleppmittel unter Vakuum abgezogen und durch das vorgesehene Lösemittel ersetzt.

Die weitere Umsetzung des VP mit dem Epoxidharz erfolgt gemäß den vorne angegebenen Verfahren. Die Ausgangsstoffe und Kenndaten sind in der Tabelle 2 zu finden.

TABELLE 1 [Verfahren (A)]

| VP | PHENOL Teile | (Mol) | FORMALDEHYD Teile | (Mol) | AMIN Teile | (Mol) | MIC Teile | (Mol) | LÖSEMITTEL (result. FKP) | Molgew./ phenol. OH |
|---|---|---|---|---|---|---|---|---|---|---|
| 1 | 220 NPH | (1,0) | 30 | (1,0) | 102 DMAPA | (1,0) | 264 MIC I | (1,0) | DGDM (80%) | 598 /1 |
| 2 | 228 B A | (1,0) | 30 | (1,0) | 130 DEAPA | (1,0) | 304 MIC II | (1,0) | DGDM (70%) | 674 /2 |
| 3 | 228 B A | (1,0) | 60 | (2,0) | 260 DEAPA | (2,0) | 528 MIC I | (2,0) | DGDM (70%) | 1040/2 |
| 4 | 94 PH | (1,0) | 60 | (2,0) | 102 DMAPA<br>129 EHA | (1,0)<br>(1,0) | 608 MIC II | (1,0) | DGDM (70%) | 957 /1 |

TABELLE 1a [Verfahren (A1)]

| VP | AMIN Teile | (Mol) | MIC Teile | (Mol) | FORMALDEHYD Teile | (Mol) | PHENOL Teile | (Mol) | LÖSEMITTEL (result. FKP) | Molgew./ phenol. OH |
|---|---|---|---|---|---|---|---|---|---|---|
| 5 | 130 DEAPA | (1,0) | 304 MIC II | (1,0) | 30 | (1,0) | 94 PH | (1,0) | DGDM (70%) | 540 /1 |
| 6 | 520 DEAPA<br>116 HMDA | (4,0)<br>(1,0) | 1824 MIC II | (6,0) | 180 | (6,0) | 880 NPH | (4,0) | DGDM (65%) | 3412/4 |
| 7 | 260 DEAPA | (1,0) | 528 MIC I | (2,0) | 60 | (2,0) | 228 BA | (1,0) | DGDM (70%) | 1040/2 |
| 8 | 119 AEPD<br>102 DMAPA | (1,0)<br>(1,0) | 608 MIC II | (2,0) | 60 | (2,0) | 228 BA | (1,0) | DGDM (70%) | 1081/2 |
| 9 | 258 EHA | (2,0) | 678 MIC III | (2,0) | 60 | (2,0) | 228 BA | (1,0) | Toluol (75%) | 1188/2 |

TABELLE 2

| Beispiel | EPH Teile | (Val) | VP Teile | (Mol) | CV Teile | (Val) | Lösemittel (FKP) | Löslichkeit mMol |
|---|---|---|---|---|---|---|---|---|
| 6 | 1824 EPH II | (3,8) | 1076 VP 1<br>506 VP 2 | (1,8)<br>(0,75) | 410 CV 4 | (0,5) | MOP 65% | 40 |
| 7 | 760 EPH 1 | (4,0) | 674 VP 2 | (1,0) | 336 CV 1 | (2,0) | EGL 70% | 35 |
| 8 | 960 EPH II | (2,0) | 957 VP 4 | (1,0) | 278 CV 2 | (1,0) | DGDM 65% | 40 |
| 9 | 380 EPH I<br>150 EPH IV | (2,0)<br>(1,0) | 1040 VP 3 | (1,0) | 475 CV 3 | (1,0) | MOP 65% | 35 |
| 10 | 400 EPH I<br>275 EPH III | (2,1)<br>(1,1) | 1040 VP 3 | (1,0) | 428 CV 3<br>280 CV 5 | (0,9)<br>(0,3) | MOP 65% | 35 |
| 11 | 480 EPH II | (1,0) | 540 VP 5 | (1,0) | — | | MOP 65% | 50 |
| 12 | 760 EPH I | (4,0) | 3412 VP 6 | (1,0) | — | | DGDM 60% | 35 |
| 13 | 190 EPH I<br>250 EPH III | (1,0)<br>(1,0) | 1040 VP 7 | (1,0) | — | | MOP 60% | 40 |
| 14 | 190 EPH I<br>150 EPH IV | (1,0)<br>(1,0) | 1081 VP 8 | (1,0) | — | | MOP 65% | 55 |
| 15 | 480 EPH II<br>250 EPH III | (1,0)<br>(1,0) | 1188 VP 9 | (1,0) | — | | MOP 70% | 60 |

In den Tabellen werden folgende Abkürzungen benützt:

| | |
|---|---|
| PH | Phenol |
| NPH | Nonylphenol |
| B A | Bisphenol A |
| DMAPA | N,N-Dimethylaminopropylamin |
| DEAPA | N,N-Diethylaminopropylamin |
| AEPD | Aminoethylpropandiol |
| EHA | 2-Ethylhexylamin |
| HMDA | 1,6-Hexamethylendiamin |
| MIC I | mit EGL halbblockiertes Toluylendiisocyanat |
| MIC II | mit 2-Ethylhexanol halbblockiertes Toluylendiisocyanat |
| MIC III | mit Diethylethanolamin halbblockiertes Isophorondiisocyanat |
| EPH I | Diepoxidharz auf Basis von Bisphenol A (Epoxidäquivalentgewicht ca. 190) |
| EPH II | Diepoxidharz auf Basis von Bisphenol A (Epoxidäquivalentgewicht ca. 480) |
| EPH III | Glycidylether von tertiären $C_9/C_{11}$-Monocarbonsäuren (Epoxidäquivalentgewicht 250) |
| EPH IV | Phenylglycidylether (Epoxidäquivalentgewicht 150) |
| CV 1 | Isononansäure |
| CV 2 | Halbester aus Phthalsäureanhydrid und 2-Ethylhexanol (Molgewicht 278) |
| CV 3 | Halbester aus Tetrahydrophthalsäureanhydrid und einem Hydroxyoxazolidin (aus 1 Mol Monoethanolamin, 1 Mol EPH III und 1 Mol Formaldehyd) Molgewicht 475 |
| CV 4 | linearer Polyester aus 1 Mol Adipinsäure, 2 Mol Trimethylolpropan und 0,6 Mol Tetrahydrophthalsäureanhydrid (Säurezahl ca. 70 mg KOH/g) |
| CV 5 | Adduktverbindung aus einem Polybutadienöl (mittleres Molgewicht ca. 1400) und Maleinsäureanhydrid (Gewichtsverhältnis 7 : 1), deren Anhydridgruppen mit 2-Ethylhexanol aufgeschlossen sind (Säureäquivalent ca. 930) |
| DGDM | Diethylenglykoldimethylether |
| EGL | Monoethylenglykolmonoethylether |
| MOP | Methoxypropanol |

Die gemäß den Beispielen 6 bis 15 hergestellten Bindemittel wurden als Klarlack auf Stahlblech elektrisch abgeschieden. Zur Herstellung des Klarlacks wurde die gemäß Beispiel resultierende Harzlösung mit einer 0,6% Metall entsprechenden Menge Dibutylzinndilaurat (bezogen auf Festharz) versetzt und mit deionisiertem Wasser auf einen Festkörpergehalt von 15% verdünnt. Die Filme wurden 20 Minuten bei 160°C eingebrannt und zeigten bei einer Schichtstärke von 20 ± 2 µm eine Methylethylketonfestigkeit von mindestens 150 Doppelhüben.

*Herstellung und Prüfung pigmentierter Lacke auf Basis der erfindungsgemäßen Bindemittel*

Gemäss den Angaben in der Tabelle 3 wurden pigmentierte Lacke hergestellt und in üblicher Weise auf gereinigten, zinkphospatierten Stahlblechen abgeschieden, wobei das Blech als Kathode geschaltet wurde. Die Bedingungen wurden so gewählt, daß nach dem Einbrennen (15 Minuten bei 170°C) ein Film von 20 µm Stärke resultierte.

Die Korrosionsfestigkeit der Bleche wurde im Salzsprühtest gemäß ASTM B 117-73 geprüft. Weitere Prüfungen betrafen den Gitterschnitt (nach DIN 53 151) bzw. den Dornbiegetest (nach DIN 53 152). Die Ergebnisse sind in der Tabelle 4 zusammengefaßt.

TABELLE 3

Formulierung der Elektrotauchlacke

| Lack | Bindemittel Beispiel | Farbpaste | Pigment-Bindemittelverhältnis (Lack) | Katalysator (1) | Neutralisation (2) | Lackfestkörper (3) |
|---|---|---|---|---|---|---|
| A | 1 | I | 0,4 : 1 | 0,6 | 50 | 20 |
| B | 2 | I | 0,3 : 1 | 0,7 | 40 | 16 |
| C | 3 | II | 0,5 : 1 | 0,8 | 35 | 18 |
| D | 4 | I | 0,4 : 1 | 0,8 | 50 | 16 |
| E | 5 | I | 0,4 : 1 | 0,5 | 35 | 16 |
| F | 6 | I | 0,3 : 1 | 0,8 | 40 | 18 |
| G | 7 | II | 0,4 : 1 | 0,6 | 35 | 17 |
| H | 8 | I | 0,45 : 1 | 0,6 | 40 | 15 |
| I | 9 | II | 0,35 : 1 | 0,8 | 40 | 20 |
| K | 10 | I | 0,5 : 1 | 0,7 | 40 | 18 |
| L | 11 | I | 0,4 : 1 | 0,6 | 50 | 20 |
| M | 12 | II | 0,5 : 1 | 0,8 | 35 | 18 |
| N | 13 | I | 0,3 : 1 | 0,7 | 45 | 16 |
| O | 14 | I | 0,4 : 1 | 0,8 | 55 | 18 |
| P | 15 | I | 0,4 : 1 | 0,8 | 60 | 16 |

(1) % Sn (als Dibutylzinndilaurat) (2) mMol Ameisensäure pro 100 g Festharz (3) % Gesamtfestkörper

Für die Farbpaste I wurde ein Harz eingesetzt, welches wie folgt hergestellt wurde:

In einem mit Rührer, Thermometer, Zugabetrichter, Wasserabscheider und Rückflußkühler ausgestatteten Reaktionsgefäß werden 440 Teile eines epoxidierten Polybutadienöls (Molekulargewicht ca. 1400, Epoxidäquivalent ca. 440) mit 92 Teilen Dimethylaminopropylamin (0,9 Mol) in Anwesenheit von 0,5 Teilen 2,6-Di-tert.-butyl-4-methyl-phenol (Inhibitor) bei 160 bis 200°C umgesetzt, bis alle Epoxidgruppen verbraucht sind. Nach Kühlen auf 80°C werden 30 Teile Paraformaldehyd 91% (0,9 Mol) zugegeben und mit Spezialbenzin (Siedebereich 80 bis 120°C) bei dieser Temperatur 18 Teile Reaktionswasser azeotrop entfernt. Nach Abziehen des Schleppmittels unter Vakuum wird der Ansatz in 59 Teilen Ethylenglykolmonobutylether gelöst. Das Harz weist folgende Kennzahlen auf:

| | |
|---|---|
| Viskosität: | 2600 mPa.s / 25°C |
| Oxazolidinäquivalent (ber.): | 604 |
| Aminzahl: | 185 mg KOH/g |
| Aliphatischer Anteil: | 80% |
| Molekulargewicht (ber.): | 1632 |
| Löslichkeit (1): | 25 mMol Ameisensäure pro 100 g Festharz |

(1) Zur Herstellung einer stabilen wäßrigen Dispersion notwendige Säuremenge.

Aus 100 Teilen (Festharz) des Pastenharzes, 20 Teilen einer 25%igen Lösung in EGL eines Netzmittels auf der Basis eines Acetylenalkohols, 24 Teilen Milchsäure (5N) und deionisiertem Wasser wird eine 15%ige Lösung hergestellt, welche in einer Laborperlmühle mit 24 Teilen Farbruß, 1104 Teilen Titandioxid und 72 Teilen basischem Bleisilikat vermahlen wird. (Pigment/Bindemittel-Verhältnis 12 : 1).

Die Farbpaste II basiert auf der im Beispiel 4 beschriebenen PHV 1. 100 Teile (Festharz) dieser Komponente werden in üblicher Weise mit 1 Teil Farbruß, 147 Teilen Titandioxid und 12 Teilen basischem Bleisilikat verarbeitet (Pigment/Bindemittel-Verhältnis 1,6 : 1).

TABELLE 4

Prüfergebnisse
(Einbrennbedingungen 15 min/170°C)

| Lack | Salzsprühtest/Stunden | Gitterschicht | Dornbiegetest (mm) |
|---|---|---|---|
| A | 1500 | 0 | 12 |
| B | 1800 | 1 | 8 |
| C | 1800 | 1 | 5 |
| D | 2000 | 0 | 8 |
| E | 2000 | 0 | 2 |
| F | 1000 | 1 | 2 |
| G | 1000 | 0 | 5 |
| H | 1200 | 2 | 20 |
| I | 1000 | 1 | 10 |
| K | 2000 | 0 | 2 |

TABELLE 4 (Fortsetzung)

| Lack | Salzsprühtest/Stunden | Gitterschicht | Dornbiegetest (mm) |
|---|---|---|---|
| L | 1500 | 0 | 12 |
| M | 1800 | 1 | 5 |
| N | 1800 | 1 | 8 |
| O | 1400 | 0 | 2 |
| P | 1000 | 2 | 8 |

Es ist überraschend, daß auch bei einer Reduzierung der Einbrenntemperatur auf 160 bzw. 150°C bei einer Einbrennzeit von 15 bis vorzugsweise 20 Minuten die Prüfergebnisse nur unwesentlich schlechter werden.

**Patentansprüche**

1. Verfahren zur Herstellung von selbstvernetzenden, nach Protonierung wasserverdünnbaren kationischen Lackbindemitteln auf der Basis von Reaktionsprodukten aus substituierten Harnstoff-Phenol-Formaldehyd-Kondensaten und Epoxidharzen, dadurch gekennzeichnet, daß man

(A) ein durchschnittlich mindestens eine NH-Gruppe pro Molekül aufweisendes Aminoalkylierungsprodukt aus Phenol und/oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder Alkylendiamin und Formaldehyd oder einer formaldehydabspaltenden Verbindung mit einem halbblockierten Diisocyanat oder

(A1) ein halbblockiertes Diisocyanat mit einem primären Alkylamin und/oder primären Alkanolamin und/oder Alkylendiamin und den entstehenden substituierten Harnstoff mit Formaldehyd oder einer formaldehydabspaltenden Verbindung und Phenol und/oder einem substituierten Phenol, vorzugsweise Monoalkyl- oder Monoaryl- oder Monoaralkylphenol mit einer oder gegebenenfalls zwei phenolischen Hydroxylgruppen umsetzt und in einer weiteren Reaktionsstufe

(B) 50 bis 100% der phenolischen Hydroxylgruppen mit Epoxidverbindungen, vorzugsweise Diepoxidharzen mit einem Epoxidäquivalentgewicht zwischen 50 und 2000, reagiert.

2. Verfahren nach Anspruch 1, dadurch gekennzeichnet, daß man die Kondensation mit dem Phenol bei der für eine azeotrope Entfernung des Reaktionswassers mit Hilfe eines Schleppmittels sich einstellenden Temperatur durchführt.

3. Verfahren nach den Ansprüchen 1 und 2, dadurch gekennzeichnet, daß man als Amine diprimäre Alkylamine, vorzugsweise zusammen mit primärtertiären Alkylaminen einsetzt.

4. Verfahren nach den Ansprüchen 1 bis 3, dadurch gekennzeichnet, daß man als Blockierungsmittel für die Isocyanatgruppen aliphatische Monoalkohole, welche bei der Einbrenntemperatur abgespalten werden, einsetzt.

5. Verfahren nach den Ansprüchen 1 bis 4, dadurch gekennzeichnet, daß die Produkte eine, vorzugsweise auf tertiären Aminogruppen beruhende Aminzahl von mindestens 30 mg KOH/g aufweisen, welche durch ein bei der Herstellung des Vorproduktes (A) oder (A1) verwendetes tertiäre Aminogruppen aufweisendes Diamin und/oder durch ein bei der Halbblockierung der Diisocyanate eingesetztes Amin bedingt ist.

6. Verfahren nach den Ansprüchen 1 bis 5, dadurch gekennzeichnet, daß man 5 bis 50, vorzugsweise 10 bis 40% der Glycidylgruppen der eingesetzten Diepoxidharze vor der Reaktion mit dem nach (A) oder (A1) erhaltenen Zwischenprodukt oder gegebenenfalls gleichzeitig mit der Umsetzung gemäß Stufe (B) mit Mono- und/oder Polycarboxylverbindungen umsetzt.

7. Verfahren nach den Ansprüchen 1 bis 6, dadurch gekennzeichnet, daß man als Monocarboxylverbindungen natürliche und/oder synthetische Fettsäuren und/oder Halbester von Dicarbonsäuren mit aliphatischen Monoalkoholen und/oder Hydroxyalkyloxazolidinen einsetzt.

8. Verfahren nach den Ansprüchen 1 bis 7, dadurch gekennzeichnet, daß man als Polycarboxylverbindungen dimere Fettsäuren und/oder Carboxylgruppen tragende, vorzugsweise lineare Polyester und/oder Addukte von Maleinsäureanhydrid an flüssige Butadienpolymere, wobei die Anhydridgruppen vor der Reaktion mit Monoalkoholen geöffnet werden, einsetzt.

9. Nach Protonierung wasserverdünnbarer kationische Lackbindemittel auf der Basis von Reaktionsprodukten aus substituierten Harnstoff-Phenol-Formaldehyd-Kondensaten und Epoxidharzen, dadurch gekennzeichnet, daß man

(A) ein durchschnittlich mindestens eine NH-Gruppe pro Molekül aufweisendes Aminoalkylierungsprodukt aus Phenol und/oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder Alkylendiamin und Formaldehyd oder einer formaldehydabspaltenden Verbindung mit einem halbblockierten Diisocyanat oder

(A1) ein halbblockiertes Diisocyanat mit einem primären Alkylamin und/oder primären Alkanolamin und/oder Alkylendiamin und den entstehenden substituierten Harnstoff mit Formaldehyd oder einer formaldehydabspaltenden Verbindung und Phenol und/oder einem substituierten Phenol, vorzugsweise Monoalkyl- oder Monoaryl- oder Monoaralkylphenol mit einer oder gegebenenfalls zwei phenolischen Hydroxylgruppen umsetzt und in einer weiteren Reaktionsstufe

(B) 50 bis 100% der phenolischen Hydroxylgruppen mit Epoxidverbindungen, vorzugsweise Diepoxidharzen mit einem Epoxidäquivalentgewicht zwischen 50 und 2000, reagiert werden, wobei der Ansatz so formuliert wird, daß das Reaktionsprodukt eine Aminzahl von mindestens 30 mg KOH/g aufweist.

10. Verwendung der Bindemittel nach Anspruch 9, in ofentrocknenden Lacken.

11. Verwendung der Bindemittel nach Anspruch 9, in kathodisch abscheidbaren Elektrotauchlacken.

12. Verwendung der Bindemittel nach Anspruch 9, dadurch gekennzeichnet, daß man die Bindemittel in Mischungen einsetzt, welche zwischen 5 und 80 Gew.-%, vorzugsweise 10 bis 50 Gew.-%, einer wasserlöslichen und/oder einer weitgehend wasserunlöslichen Polyhydroxylverbindung mit einem Hydroäquivalentgewicht von höchstens 1000, vorzugsweise 100 bis 400, enthalten.

**Claims**

1. Process for preparing self-crosslinking cationic paint binders, water-dilutable upon protonation, based on reaction products of substituted urea-phenol-formaldehyde condensates and epoxy resins, characterised in that

(A) an aminoalkylation product, carrying on average at least one NH-group per molecule, of phenol and/or a substituted phenol, preferably monoalkyl- or monoaryl- or monoaralkylphenol with one or optionally with two phenolic hydroxy groups, of a primary alkylamine and/or primary alkanolamine and/or alkylenediamine and of formaldehyde or a formaldehyde donating compound, is reacted with a semi-blocked diisocyanate or

(A1) a semi-blocked diisocyanate is reacted with a primary alkylamine and/or primary alkanolamine and/or alkylenediamine and the resulting substituted urea is reacted with formaldehyde or a formaldehyde donating compound and with phenol and/or a substituted phenol, preferably monoalkyl- or monoaryl- or monoaralkylphenol with one or optionally with two phenolic hydroxy groups and in a further reaction step

(B) 50 to 100% of the phenolic hydroxy groups are reacted with epoxy compounds, preferably with diepoxy resins with an epoxy equivalent weight of between 50 and 2000.

2. Process according to claim 1, characterised in that the condensation with the phenol is carried out at the temperature which is obtained during the azeotropic removal of the reaction water by means of an entraining agent.

3. Process according to claims 1 and 2, characterised in that diprimary alkylamines are used as amines, preferably in combination with primary-tertiary alkylamines.

4. Process according to claims 1 to 3, characterised in that aliphatic monoalcohols which are split off at the stoving temperature are used as blocking agents for the isocyanate groups.

5. Process according to claims 1 to 4, characterised in that the products have an amine number of at least 30 mg KOH/g, preferably based on tertiary amino groups, this amine number being produced by a diamine containing tertiary amino groups used in the preparation of the intermediate product (A) or (A1) and/or by an amine used for the semi-blocking of the diisocyanates.

6. Process according to claims 1 to 5, characterised in that 5 to 50%, preferably 10 to 40%, of the glycidyl groups of the diepoxy resins used are reacted with mono- and/or polycarboxy compounds prior to the reaction with the intermediate product obtained in (A) or (A1) or optionally simultaneously with the reaction according to step (B).

7. Process according to claims 1 to 6, characterised in that natural and/or synthetic fatty acids and/or semiesters of dicarboxylic acids with aliphatic monoalcohols and/or hydroxyalkyloxazolidines are used as monocarboxy compounds.

8. Process according to claims 1 to 7, characterised in that the compounds used as polycarboxy compounds are dimeric fatty acids and/or carboxy groups carrying, preferably linear, polyesters and/or adducts of maleic anhydride to liquid butadiene polymers, the anhydride groups being opened before the reaction with monoalcohols.

9. Cationic paint binders, water-dilutable upon protonation, based on reaction products of substituted urea-phenol-formaldehyde condensates and epoxy resins, characterised in that

(A) an aminoalkylation product, carrying on average at least one NH-group per molecule, of phenol and/or a substituted phenol, preferably monoalkyl- or monoaryl- or monoaralkylphenol with one or optionally with two phenolic hydroxy groups, of a primary alkylamine and/or primary alkanolamine and/or alkylenediamine and of formaldehyde or a formaldehyde donating compound, is reacted with a semi-blocked diisocyanate or

(A1) a semi-blocked diisocyanate is reacted with a primary alkylamine and/or primary alkanolamine and/or alkylenediamine and the resulting substituted urea is reacted with formaldehyde or a formaldehyde donating compound and with phenol and/or a substituted phenol, preferably monoalkyl- or monoaryl- or monoaralkylphenol with one or optionally with two phenolic hydroxy groups and in a further reaction step

(B) 50 to 100% of the phenolic hydroxy groups are reacted with epoxy compounds, preferably with diepoxy resins with an epoxy equivalent weight of between 50 and 2000, the mixture being formulated to provide a reaction product having an amine number of at least 30 mg KOH/g.

10. Use of the binders according to claim 9 in stoving paints.

11. Use of the binders according to claim 9 in cathodically depositable electrodeposition paints.

12. Use of the binders according to claim 9, characterised in that the binders are used as blends containing between 5 and 80% by weight, preferably 10 to 50% by weight, of a water-soluble and/or a substantially water-insoluble polyhydroxy compound with a hydroxy equivalent weight of not more than 1000, preferably 100 to 400.

**Revendications**

1. Procédé pour la préparation de liants autoréticulants pour peintures cationiques, diluables dans l'eau après protonation à base de produits réactionnels obtenus à partir de condensats substitués de formaldéhyde, de phénol et d'urée avec dés résines époxydes, caractérisé en ce que l'on fait réagir

(A) un produit d'aminoalcoylation présentant en moyenne au moins un groupe NH par molécule obtenu, à partir d'un phénol et/ou d'un phénol substitué, de préférence un monoalcoyl- ou monoaryl- ou un monoaralcoylphénol ayant un ou les cas échéant deux groupes hydroxyle phénoliques, d'une alcoylamine primaire et/ou d'une alcanolamine primaire et/ou d'une alcoylène-diamine et de formaldéhyde ou d'un composé formant par scission du formaldéhyde avec un diisocyanate semi-bloqué ou

(A1) un diisocyanate semi-bloqué avec une alcoylamine primaire et/ou une alcanolamine primaire et/ou une alcoylène-diamine et l'urée substituée produite avec du formaldéhyde ou un composé formant du formaldéhyde par scission et du phénol et/ou un phénol substitué, de préférence un monoalcoyl- ou un monoaryl- ou un monoaralcoylphénol avec un ou éventuellement deux groupes hydroxyle phénoliques et en ce que dans une autre étape réactionnelle, on fait réagir

(B) 50 à 100% des groupes hydroxyle phénoliques avec des composés époxydés, de préférence des résines diépoxydes ayant un équivalent poids époxyde situé entre 50 et 2000.

2. Procédé selon la revendication 1, caractérisé en ce que l'on effectue la condensation avec le phénol à la température s'établissant pour une évacuation azéotrope de l'eau réactionnelle à l'aide d'un agent d'entraînement.

3. Procédé selon les revendications 1 et 2, caractérisé en ce qu'en tant qu'amines, on met en oeuvre des alcoylamines di-primaire, de préférence conjointement avec des alcoylamines primaires-tertiaires.

4. Procédé selon les revendications 1 à 3, caractérisé en ce qu'en tant qu'agent bloquant pour les groupes isocyanate on met en oeuvre des monoalcools aliphatiques qui se débloquent à la température de cuisson.

5. Procédé selon les revendications 1 à 4, caractérisé en ce que les produits présentent un indice d'amine basé de préférence sur des groupes d'amines tertiaires d'au moins 30 mg KOH/g, qui est dû à une diamine utilisée lors de la fabrication du produit intermédiaire (A) ou (A1) et présentant des groupes d'amines tertiaires et/ou à une amine mise en oeuvre lors du semi-blocage des diisocyanates.

6. Procédé selon les revendications 1 à 5, caractérisé en ce que l'on fait réagir de 5 à 50%, de préférence de 10 à 40%, des groupes glycidyle des résines diépoxydes mises en oeuvre, avant la réaction avec le produit intermédiaire obtenu selon (A) ou (A1) ou, le cas échéant, simultanément à la réaction selon l'étape (B) avec des composés mono- et/ou polycarboxyliques.

7. Procédé selon les revendications 1 à 6, caractérisé en ce que l'on met en oeuvre en tant que composés monocarboxyliques des acides gras naturels et/ou synthétiques et/ou des semi-esters d'acides dicarboxyliques avec des monoalcools aliphatiques et/ou des hydroxyalcoyloxazolidines.

8. Procédé selon les revendications 1 à 7, caractérisé en ce que l'on met en oeuvre en tant que composés polycarboxyliques des acides gras dimères et/ou des polyesters de préférence linéaires portant des groupes carboxyliques et/ou des produits d'addition de l'anhydride de l'acide maléique sur des polymères liquides du butadiène les groupes anhydrides étant ouverts avant la réaction avec des monoalcools.

9. Liants pour peintures cationiques diluables dans l'eau après protonation à base de produits réactionnels à partir de condensats, de formaldéhyde, de phénol et d'urée subsitués avec des résines époxydes, caractérisés en ce que l'on fait reagir

(A) un produit d'aminoalcoylation présentant en moyenne au moins un groupe NH par molécule obtenu, à partir du phénol et/ou d'un phénol substitué, de préférence un monoalcoyl- ou monoaryl- ou un monoaralcoylphénol ayant un ou les cas échéant deux groupes hydroxyle phénoliques, d'une alcoylamine primaire et/ou d'une alcanolamine primaire et/ou d'une alcoylène-diamine et du formaldéhyde ou d'un composé formant par scission du formaldéhyde avec un diisocyanate semi-bloqué ou

(A1) un diisocyanate semi-bloqué avec une alcoylamine primaire et/ou une alcanolamine primaire et/ou une alcoylène-diamine et l'urée substituée produite avec le formaldéhyde ou un composé formant du formaldéhyde par scission et du phénol et/ou un phénol substitué, de préférence un monoalcoyl- ou un monoaryl- ou un monoaralcoylphénol avec un ou éventuellement deux groupes hydroxyle phénoliques et en ce que dans une autre étape réactionnelle supplémentaire

(B) on fait réagir 50 à 100% des groupes hydroxyle phénoliques avec des composés époxydés, de préférence des résines diépoxydes ayant un équivalent poids époxyde entre 50 et 2000, le mélange de réaction étant formulé de telle manière que le produit réactionnel présente un indice d'amine d'au moins 30 mg KOH/g.

10. Utilisation des liants selon la revendication 9, dans des peintures séchant au four.

11. Utilisation des liants selon la revendication 9, dans des peintures électrophorétiques dépositables cathodiquement.

12. Utilisation des liants selon la revendication 9, caractérisée en ce que l'on met en oeuvre les liants dans des mélanges qui contiennent entre 5 et 80% en poids, de préférence de 10 à 50% en poids, d'un composé hydrosoluble et/ou d'un composé polyhydroxyle sensiblement non soluble dans l'eau ayant un équivalent poids hydroxy de 1000 au maximum, de préférence de 100 à 400.